# EUROPÄISCHE PATENTANMELDUNG

(11) **EP 1 008 506 A2**
(43) Veröffentlichungstag der Anmeldung: **14.06.2000**
(21) Anmeldenummer: 99122537.6
(22) Anmeldetag: 12.11.1999
(51) Int. Cl.: B62D 1/18

(54) **Lenksäulensicherungsvorrichtung**

(30) Priorität: 10.12.1998 DE 19857075
(71) Anmelder: Volkswagen Aktiengesellschaft, 38436 Wolfsburg (DE)
(72) Erfinder: Fechner, Holger, 38440 Wolfsburg (DE); Simon, Wolfgang, Dipl.-Ing., 38527 Meine (DE); Klement, Joachim, 38116 Braunschweig (DE)

(57) **Zusammenfassung**

Eine erfindungsgemäße Lenksäulensicherungsvorrichtung umfaßt eine Lenksäule 1 eines Kraftfahrzeuges, wobei die Lenksäule 1 eine Längs- und Höhenverstellung 2 aufweist. Beispielsweise bei einer Betätigung eines Zündschlosses 4 mittels einer Betätigungseinrichtung 3 wird die Verstellbarkeit der Längs- und Höhenverstellung 2 blockiert. Durch die Auswertung der Betätigung bzw. Nichtbetätigung des Zündschlosses 4 läßt sich die Verstellbarkeit der Lenksäule 1 für bestimmte Fälle unterbinden. Eine Einrichtung zum Blockieren bzw. Außerkraftsetzen der Längs- und Höhenverstellung 2 kann dabei zwischen dem Zündschloß 4 und der Längs- und Höhenverstellung 2 angeordnet sein und mechanisch, elektrisch oder elektromechanisch arbeiten.

## Beschreibung

Die vorliegende Erfindung betrifft eine Lenksäulensicherungsvorrichtung gemäß dem Oberbegriff des Patentanspruches 1.

Aus der DE 39 33 288 A1 ist es bekannt, bei einem Einschieben eines Zündschlüssels in ein Zündschloß an einem Kraftfahrzeug ein Lenkrad automatisch aus einer Ruheposition in eine maximal zulässige Betriebsposition zu verstellen, wobei ein Fahrer des Kraftfahrzeuges innerhalb eines zulässigen Bereiches eine weitere Verstellung der Position des Lenkrads vornehmen kann.

Bei dieser Verstellung wird eine Längs- und Höhenverstellung der Lenksäule durchgeführt.

Bei dieser bekannten Vorrichtung ist die Verstellung der Länge und der Höhe der Lenksäule, und damit die Position des Lenkrads auch nach dem Betätigen des Zündschlüssels und auch während der Fahrt mit dem Kraftfahrzeug möglich.

Grundsätzlich ist jedoch eine solche Verstellung während der Fahrt mit einem hohen Risiko verbunden, da der Fahrer vom Verkehr abgelenkt ist.

Es ist daher die Aufgabe der vorliegenden Erfindung, eine Lenksäulensicherungsvorrichtung zu schaffen, die eine Verstellung der Lenksäule während der Fahrt unterbinden kann.

Diese Aufgabe wird durch eine Lenksäulensicherungsvorrichtung gelöst, die darüber hinaus die Merkmale aufweist, die im kennzeichnenden Teil des Patentanspruchs 1 angegeben sind.

Demnach gewährleistet die erfindungsgemäße Lenksäulensicherungsvorrichtung für eine Lenksäule eines Kraftfahrzeuges, wobei die Lenksäule eine Längs- und Höhenverstellung aufweist, daß bei sich bewegendem Kraftfahrzeug die Verstellbarkeit der Längs- und Höhenverstellung blockiert wird.

Vorteilhafte Weiterbildungen der erfindungsgemäßen Lenksäulensicherungsvorrichtung sind der Gegenstand von Unteransprüchen.

Die Erfindung wird im folgenden anhand einer ausführlichen Beschreibung der Ausführungsform beschrieben, die sich auf die zugehörige Zeichnung bezieht.

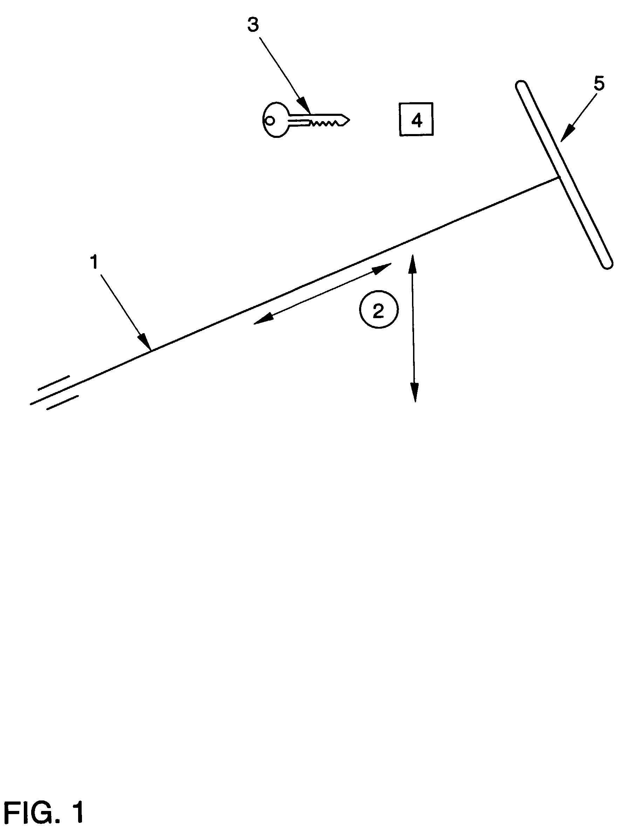

In der Zeichnung zeigt die:
Fig. eine schematische Darstellung einer Lenksäulensicherungsvorrichtung nach der vorliegenden Erfindung.

In der Figur ist schematisch und beispielhaft eine erfindungsgemäße Lenksäulensicherungsvorrichtung dargestellt. Eine Lenksäule 1 weist die Möglichkeit einer Längen- und Höhenverstellbarkeit auf, wobei diese Einstellung mittels einer bekannten Längs- und Höhenverstellung 2 erfolgt.

Am oberen Ende der Lenksäule 1 befindet sich ein Lenkrad 5. Am unteren Ende der Lenksäule 1 steht diese vorzugsweise mit einem Lenkgetriebe (nicht dargestellt) in Eingriff.

Sofern ein Zündschloß 4 mittels einer Betätigungseinrichtung 3, in der gezeigten Ausführungsform mittels eines Zündschlüssels 3, noch nicht betätigt ist, läßt sich in üblicher Art und Weise die Länge der Lenksäule 1 und die Höhenlage des Lenkrads 5 mittels einer Neigungsverstellung von zumindest einem Teilabschnitt der Lenksäule 1 einstellen, um eine für den Fahrer optimale Position des Lenkrades 5 zu erreichen.

Bei dem dargestellten Ausführungsbeispiel wird bei einer Betätigung des Zündschlosses 4 die Längs- und Höhenverstellung 2 der Lenksäule 1 blockiert.

Diese Betätigung des Zündschlosses 4 kann ein Einschalten der Zündung des Kraftfahrzeuges sein oder kann auch ein Anlassen des Motors des Kraftfahrzeuges sein.

Sobald also das Zündschloß 4 betätigt ist, ist eine weitere Verstellung der Lenksäule 1 bzw. des Lenkrads 5 nicht mehr möglich.

Hieraus ergeben sich die folgenden Vorteile:
a) eine Ablenkung des Fahrers wird vermieden, falls dieser während der Fahrt das Lenkrad 5 verstellen möchte;
b) die Lenksäule 1 ist durch das Blockieren der Längs- und Höhenverstellung 2 als eine mechanische Baueinheit anzusehen, wodurch im Falle eines Unfalls die gesamte Länge der Lenksäule 1 zur Energieabsorption zur Verfügung steht; und
c) Gemeinsam mit der Blockade der Längs- und Höhenverstellung 2 kann wahlweise eine Deformationselement in Wirkstellung gebracht werden und/oder ein Rückhaltesystem aktiviert werden.

Durch die Auswertung der Betätigung bzw. Nichtbetätigung des Zündschlosses 4 läßt sich die Verstellbarkeit der Lenksäule 1 für bestimmte Fälle unterbinden. Die Einrichtung zum Blockieren bzw. Außerkraftsetzen der Längs- und Höhenverstellung 2 ist zwischen dem Zündschloß 4 und der Längs- und Höhenverstellung 2 angeordnet und arbeitet mechanisch, elektrisch oder elektromechanisch.

Zum Beispiel kann eine Längs- und Höhenverstellung 2, die mittels einer elektromotorischen Antriebseinrichtung angetrieben und verstellt wird, derart außer Betrieb gesetzt werden, daß die Stromzufuhr zu der Antriebseinrichtung unterbrochen wird.

Die erfindungsgemäße Lenksäulensicherungsvorrichtung umfaßt somit eine Lenksäule 1 eines Kraftfahrzeuges, wobei die Lenksäule 1 eine Längs- und Höhenverstellung 2 aufweist. Eine Betätigungseinrichtung 3 für ein Zündschloß 4 des Kraftfahrzeuges, eine andere geeignete Betätigungseinrichtung, Sensoren, die eine Bewegung des Kraftfahrzeuges erfassen, oder andere geeignete Mittel sind vorgesehen, um bei sich bewegendem Kraftfahrzeug die Verstellbarkeit der Längs- und Höhenverstellung 2 zu blockieren. Beispielsweise durch die Auswertung der Betätigung bzw. Nichtbetätigung des Zündschlosses 4 läßt sich die Verstellbarkeit der Lenksäule 1 für bestimmte Fälle unterbinden. Eine Einrichtung zum Blockieren bzw. Außerkraftsetzen der Längs- und Höhenverstellung 2 kann dabei zwischen dem Zündschloß 4 und der Längs- und Höhenverstellung 2 angeordnet sein und mechanisch, elektrisch oder elektromechanisch arbeiten.

### BEZUGSZEICHEN LISTE

- 1: Lenksäule
- 2: Längs- und Höhenverstellung
- 3: Betätigungseinrichtung
- 4: Zündschloß
- 5: Lenkrad

## Patentansprüche

1. Lenksäulensicherungsvorrichtung für eine Lenksäule (1) eines Kraftfahrzeuges, wobei die Lenksäule (1) eine Längs- und Höhenverstellung (2) aufweist,
**dadurch gekennzeichnet**, daß
die Verstellbarkeit der Längs- und Höhenverstellung (2) bei sich bewegendem Kraftfahrzeug blockiert ist.

2. Lenksäulensicherungsvorrichtung nach Anspruch 1 mit einer Betätigungseinrichtung (3) für ein Zündschloß (4) des Kraftfahrzeuges, dadurch gekennzeichnet, daß bei einer Betätigung des Zündschlosses (4) mittels der Betätigungseinrichtung (3) die Verstellbarkeit der Längs- und Höhenverstellung (2) blockiert ist.

3. Lenksäulensicherungsvorrichtung nach Anspruch 2, dadurch gekennzeichnet, daß bei der Betätigung des Zündschlosses (4) ein Deformationselement in Wirkstellung gebracht wird und/oder ein Rückhaltesystem aktiviert wird.

4. Lenksäulensicherungsvorrichtung nach Anspruch 2 oder 3, dadurch gekennzeichnet, daß die Betätigungseinrichtung (3) ein Zündschlüssel ist.

5. Lenksäulensicherungsvorrichtung nach einem der Ansprüche 1 bis 4, dadurch gekennzeichnet, daß die Verstellbarkeit bei Einschalten der Zündung des Kraftfahrzeuges blockiert ist.

6. Lenksäulensicherungsvorrichtung nach einem der Ansprüche 1 bis 4, dadurch gekennzeichnet, daß die Verstellbarkeit bei Anlassen des Motors des Kraftfahrzeuges blockiert ist.

7. Lenksäulensicherungsvorrichtung nach einem der Ansprüche 2 bis 6, dadurch gekennzeichnet, daß das Blockieren der Längs- und Höhenverstellung (2) mittels einer Einrichtung erfolgt, die zwischen dem Zündschloß (4) und der Längs- und Höhenverstellung (2) angeordnet ist.

8. Lenksäulensicherungsvorrichtung nach einem der Ansprüche 1 bis 7, dadurch gekennzeichnet, daß die Einrichtung zum Blockieren der Längs- und Höhenverstellung (2) mechanisch, elektrisch oder elektromechanisch arbeitet.
